# EUROPEAN PATENT APPLICATION

(11) **EP 4 678 504 A1**
(43) Date of publication of application: **14.01.2026**
(21) Application number: 24382740.9
(22) Date of filing: 10.07.2024
(51) Int. Cl.: B61L 15/00

(54) **SYSTEM AND METHOD FOR AUTOMATICALLY CHECKING AN INTEGRITY OF A GUIDED VEHICLE**

(71) Applicant: Siemens Rail Automation S.A.U., 28760 Tres Cantos (Madrid) (ES)
(72) Inventor: Garcia Serrano Gonzalez, Juan Manuel, 45005 TOLEDO (ES)
(74) Representative: Siemens Patent Attorneys

(57) **Abstract**

The present invention concerns a system (100) and a method for checking an integrity of a guided vehicle (200), said guided vehicle (200) comprising a first car (FC), a last car (LC), and optionally one or several intermediate cars (IC) located between the first car (FC) and the last car (LC), the system (100) comprising:
- at least one beacon (110), each beacon (110) being configured for wirelessly broadcasting a signal comprising a unique identifier enabling an identification of the beacon (110) broadcasting said signal, wherein at least one beacon (110), hereafter called first beacon (FB), is configured for being installed on the first car (FC);
- optionally, one or several amplifiers (120) for extending a transmission range of a received beacon signal so that it reaches a gateway (130), each amplifier being configured for being installed on one of said intermediate cars (IC);
- said gateway (130) configured for receiving any beacon signal, said gateway (130) being configured for being installed on the last car (LC) and for transmitting any received beacon signal to a central processing unit (140), hereafter CPU;
- said CPU (140), connected to the gateway (130), and configured for determining a presence of the first beacon (FB) by identifying, in the beacon signals transmitted by the gateway (130), the unique identifier of the first beacon (FB).

## Description

### Technical Field

The present invention proposes a system and a method for checking an integrity of a guided vehicle. By "guided vehicle", it has to be understood any rail transport means configured for moving on tracks of a railway network, said guided vehicle typically running on at least one rail configured for supporting one or several wheels of said guided vehicle or using at least one rail as a guiding means for guiding the guided vehicle along a trajectory defined by said rail. Said rail transport means are for instance public transport means like subways, trains or train units, etc., as well as load transporting means such as, for example, freight trains, for which safety is a very important factor. In particular, a critical aspect concerns guided vehicles comprising several coaches or cars. For such guided vehicles, it is required to determine, notably in real time, their integrity, i.e. whether it comprises all the cars that were coupled together to form the guided vehicle. Typically, long convoys with several cars can be uncoupled by accident and such uncoupling has to be detected immediately to avoid critical situations.

### Background Art

Known in the art techniques for checking the integrity of a guided vehicle comprising several cars exist. They are for instance based on GPS systems that enable to locate each or some of the cars, and, by this way, to determine the integrity of the guided vehicle from position information of the GPS equipped cars. Other systems use physical wires running along the guided vehicle and connecting all car together. A change in the integrity of the guided vehicle might be then detected via said wires. However, the known in the art techniques are usually relatively complex to implement, and not very flexible, notably in case of a reconfiguration of the composition of the guided vehicle, for instance by removing or adding a car. A simpler solution is therefore needed.

### Summary of Invention

An objective of the present invention is to propose a method and a system for checking the integrity of a guided vehicle comprising several cars, wherein said method and system are easy to implement, offer flexibility with respect to composition reconfigurations of the guided vehicle, and can be quickly adapted to a guided vehicle.

This objective is achieved by the measures taken in accordance with the independent claims. Further advantageous embodiments are proposed by the dependent claims.

More precisely, the present invention concerns a system for checking an integrity of a guided vehicle, said guided vehicle comprising a first car, a last car, and optionally one or several intermediate cars located between the first car and the last car, each car being typically coupled to each directly neighboring car, said system comprising:
- at least one beacon, each beacon being configured for wirelessly, and preferentially periodically or continuously, broadcasting a signal comprising a unique identifier enabling an identification of the beacon broadcasting said signal, wherein at least one beacon, hereafter called first beacon, is configured for being installed on the first car;
- optionally, one or several amplifiers for extending a transmission range of a received beacon signal so that it reaches a gateway, each amplifier being configured for being installed on one of said intermediate cars;
- said gateway configured for receiving any beacon signal, said gateway being configured for being installed on the last car and for transmitting the received beacon signals to a central processing unit, hereafter CPU;
- said CPU, connected to the gateway, and configured for checking or determining, notably periodically or upon request or continuously, a presence of at least the first beacon by identifying, in the beacon signals transmitted by the gateway, the unique identifier of the first beacon. The CPU is therefore capable of checking, notably periodically or upon request, the integrity of the guided vehicle by determining whether the gateway received the signal broadcasted by the first beacon.

The present invention also concerns a method for checking an integrity of a guided vehicle comprising a first car, a last car, and optionally one or several intermediate cars located between the first car and the last car, each car being coupled to each directly neighboring car, the method comprising:
- installing one or several beacons on the cars of the guided vehicle, wherein at least one beacon, called hereafter the first beacon, is installed on the first car;
- each beacon wirelessly, and preferentially periodically, broadcasting a signal comprising a unique identifier enabling an identification of the beacon broadcasting said signal;
- optionally, installing one or several amplifiers, wherein each amplifier is installed on one of said intermediate cars of the guided vehicle, and using said one or several amplifiers for extending a transmission range of each broadcasted signal so that it reaches a gateway;
- installing the gateway on the last car and receiving any beacon signals by said gateway;
- transmitting, by the gateway, the received beacon signals to a central processing unit, hereafter CPU;
- checking, notably periodically or upon request, a presence of at least the first beacon by identifying, by the CPU, the unique identifier of the first beacon in the beacon signals transmitted by the gateway.

### Description of Embodiments

According to the present invention, the signal broadcasted by each beacon is amplified by the one or several amplifiers installed on the intermediate cars so that it reaches the gateway. Thanks to this concept, the system according to the invention might be easily adapted to changes of the guided vehicle composition (i.e. the number and position of the cars composing the guided vehicle). Typically, the signal broadcasted by a beacon might be amplified by a first one of said amplifiers so that it reaches a second one of said amplifiers which will in turn also (re-)amplify the signal of said beacon, so that it reaches a next amplifier, each amplifier amplifying the received signal in turn, until it reaches the gateway. The amplifiers according to the invention may form a chain of amplifiers comprising a first amplifier, a last amplifier, and intermediate amplifiers located between the first and last amplifiers, wherein the first amplifier receives a signal broadcasted by a beacon, amplifies it, and retransmits it, each intermediate amplifier receiving an amplified retransmitted beacon signal (typically from a directly neighboring amplifier) re-amplifies it and retransmits it, and finally, the last amplifier receives from its directly neighboring intermediate amplifier the again reamplified and retransmitted beacon signal, which is again reamplified and then transmitted to the gateway. According to the present invention, the number of amplifiers can be easily adapted to different guided vehicle compositions depending typically on the length (i.e. number of cars) of the guided vehicle. Therefore, if the car composition of a guided vehicle needs to be changed during a travel from a first station to a last station on a railway network, for instance via a coupling or an uncoupling of one or several cars, resulting in a new composition of the cars of the guided vehicle, then amplifiers can be added or removed, for always enabling at least the signal broadcasted by the first beacon to reach the gateway. This is particularly useful when a splitting of a guided vehicle into two parts takes place at a station, wherein one part will follow a first direction towards a first destination, and a second part will follow a second direction towards a second destination. The present invention enables to easily accommodate to such situation by enabling a quick installation or removal of a beacon and/or amplifier for ensuring a check of the train integrity whatever its composition. Preferentially, the gateway and optionally the CPU are installed on locomotives (i.e. the last car is preferentially the locomotive), while amplifiers and beacons are preferentially installed on the other cars (e.g. freight cars or passenger cars), but might also be installed on locomotives if needed. All depends on the guided vehicle composition.

In particular, each amplifier and/or each beacon comprise(s) a hand clamp base configured for being removably fixed onto a car of the guided vehicle in a manner free of any tool. The hand clamp base of the amplifier is preferentially the same as the hand clamp base of the beacon, but might also be different from the hand clamp base of said beacon. In particular, said hand clamp base is a magnetic clamping base. Preferentially, the system according to the invention comprises one or several mechanical receiving parts, wherein each mechanical receiving part is configured for being fixedly installed or mounted onto a car of the guided vehicle, and wherein each mechanical receiving part is configured for receiving a mechanical structure of said hand clamp base in order to removably fix the base onto the car. The hand clamp base according to the invention enables to rapidly adapt the position and the number of beacons and/or amplifiers to the car composition of the guided vehicle. Typically, a beacon, resp. amplifier, according to the invention might be rapidly removed from a car by manually unclamping it, wherein the unclamping operation is realized free of any tool. Similarly, the clamping is also realized free of tool, enabling an operator to rapidly fix a beacon or an amplifier to any of the cars of the guided vehicle, notably in function of a reconfiguration of the guided vehicle composition, for instance a future composition of the guided vehicle.

In particular, apart from the first beacon, one or several other beacons, called hereafter additional beacons, might be installed on said intermediate cars, notably in function of said car composition reconfiguration or future car composition of the guided vehicle. For instance, if the guided vehicle comprises, in an original car composition, N cars, wherein the first car is coupled to the second car, which is coupled to the third car, etc., and the N-1 car is coupled to the N^{th} car, wherein the first car comprises said first beacon and the N^{th} car, i.e. the last car, e.g. a locomotive, comprises said gateway, and, in a future car composition resulting from an uncoupling, M cars, with M<N, then the (M-N+1)^{th} car might be equipped with said additional beacon so that, after the uncoupling, the (M-N+1)^{th} car becomes the first car of the future composition, i.e. of the new car composition, and, in said new car composition, the additional beacon becomes the first beacon of said new car composition. In such a case, the system enables to check the integrity of the original car composition of the guided vehicle, as well as the integrity of its future car composition, i.e. of the new car composition. Also, the system according to the invention might be rapidly adapted to an unplanned car re-composition of the guided vehicle by clamping or unclamping an amplifier and/or a beacon. According to the present invention, each amplifier is configured for amplifying any received beacon signal and for wirelessly rebroadcasting the received beacon signal once amplified. By this way, the signal emitted by a beacon might be retransmitted, amplifier after amplifier, until reaching the gateway.

In particular, during an initialization phase of the system according to the invention, the CPU is configured for storing in a memory the unique identifier of each beacon installed on the guided vehicle. For instance, during said initialization phase, the CPU might receive, via the transmitter, the signal broadcasted by each beacon, might identify in each signal the unique identifier of the beacon that broadcasted said signal, and might then store said identifier in a memory. Once the initialization phase is completed, then the CPU periodically or continuously or upon request checks whether all stored unique identifiers are found in the signals transmitted from the gateway. Preferentially, and notably during said initialization phase, the CPU might be configured for automatically indicating a need of an amplifier, e.g. an additional amplifier, for extending the transmission range of a beacon in order to enable receiving the signal from said beacon by the gateway, said beacon being for instance the first beacon. Typically, each beacon might be activated one after another, for instance starting from the first beacon, or from the beacon located the closest to the gateway. Beacons are typically strategically installed in function of known future configurations of the guided vehicle, and typically activated one after the other. Preferentially, for each beacon that is activated, the CPU might be configured for signaling, for instance to a mobile device carried by an operator in charge of installing the beacon and through a mobile application running on said mobile device, for which position of an amplifier along a length of the guided vehicle an amplitude of the signal that is received by the gateway after its broadcasting by the currently installed or activated beacon and rebroadcasting by said amplifier is greater than a predefined threshold. The amplifier might then be installed by the operator at said position wherein said predefined threshold was exceeded. This might enable to rapidly add an additional amplifier when a reconfiguration of the guided vehicle composition comprises adding one or several cars. Preferentially, said signaling might take place in the form of an audible signal or a visual signal. Preferentially, said initialization phase might take place at each (re)configuration of a composition of the guided vehicle, i.e. each time a new car composition takes place.

### Brief Description of the Drawing

Further aspects of the present invention will be better understood through the following drawings, wherein like numbers designate like objects:
Fig. 1 schematic illustration of a preferred embodiment of a system according to the invention installed on a guided vehicle.
Fig. 2 schematic illustration of an amplifier, beacon, and gateway according to the invention.
Fig. 3 flowchart of a preferred embodiment of a method according to the invention.
Fig. 4 schematic illustration of a system according to the invention installed on a guided vehicle having a first car composition.
Fig. 5 schematic illustration of a system according to the invention installed on a guided vehicle having a second car composition.

### Description of Examples

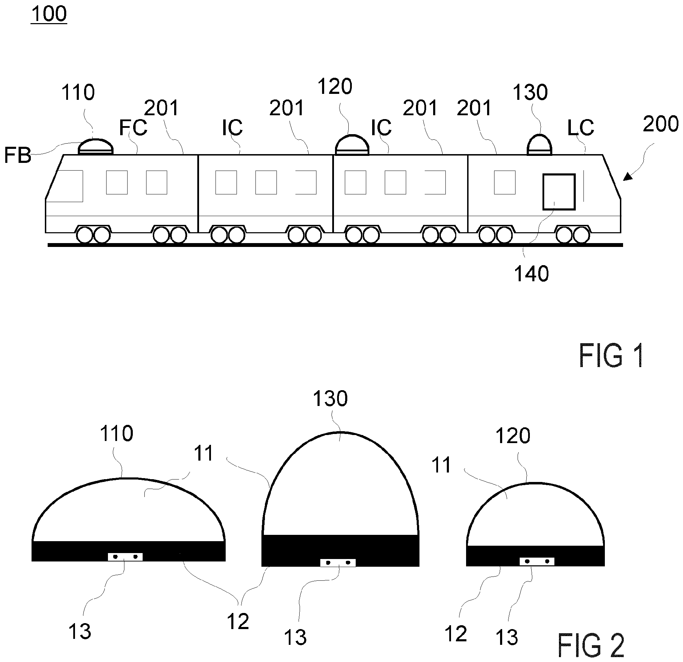

Figure 1 schematically illustrates a guided vehicle 200, composed or comprising several cars 201, wherein intermediate cars IC are located between a first car FC and a last car LC. The last car LC is for instance a motorized car, like a locomotive. Each car 201 is coupled to its directly neighboring car(s) 201 to form a convoy of coupled cars 201. Said guided vehicle 201 is typically a train or a metro, and may move on tracks of a railway network. The car composition of the guided vehicle 200 might be changed for satisfying for instance a passenger or freight demand, or for adapting the passenger or freight capacity of the guided vehicle to some event. Said change of the car composition might result in adding or removing some cars from an original composition, the guided vehicle being for instance split into two parts, a first part having a first destination station and a second part having a second destination station. The present invention enables to check the integrity of the guided vehicle whatever its car composition is thanks to a system 100 that is modulable and adaptable to each car composition of the guided vehicle 200.

Said system 100 comprises one or several beacons 110, wherein at least one of said one or several beacons 110 is configured for being installed onto the first car FC of the guided vehicle 200 and will be referred to as the first beacon FB. The system 100 further comprises one or several amplifiers 120, a gateway 130, and a CPU 140. The CPU 140 typically comprises a processor and a memory. Each beacon 110, and in particular the first beacon FB, is configured for wirelessly broadcasting a signal comprising a unique identifier. This broadcasting may take place continuously, upon request sent for instance from the CPU, or periodically (e.g. according to a predefined frequency). From said unique identifier, the CPU 140 is able to identify from which beacon 110 a signal transmitted to the CPU 140 by the gateway 130 originates from. One advantage of the present invention is that each beacon and each amplifier might be easily installed on or removed from a car of the guided vehicle. This enables to the system to work as a plug and play system, wherein elements (i.e. the beacons and the amplifiers) might be easily installed or removed for adapting the system to a current composition of the guided vehicle or to any new composition of the guided vehicle. Preferentially, the gateway is fixedly installed on the motorized car of the guided vehicle, while amplifiers and/or beacons are removably fixed onto a car of the guided vehicle in a manner free of any tool. This means that an operator does not need any tool for installing on or removing from a car a beacon and/or an amplifier.

According to the present invention, the signal broadcasted by a beacon 110, e.g. the first beacon FB, is received, then amplified, and then retransmitted by each amplifier 120 located between said beacon and the gateway 130. This means that by adding amplifiers 120 between the beacon and the gateway, one can increase the transmission range of the beacon, and easily adapt the system to a change of the composition of the guided vehicle cars. Each amplifier 120 that receives a signal that has been broadcasted by a beacon is configured for amplifying said signal, and for re-broadcasting it so that it reaches a next directly neighboring amplifier or the gateway 130. The signal outputted by the beacon is thus successively amplified and retransmitted by each amplifier located between the beacon and the gateway, from the amplifier that is the closest to the beacon to the amplifier that is the farthest to the beacon, in order to enable this transmission of the beacon broadcasted signal up to the gateway 130. The amplifier 120 according to the invention is thus configured for extending a transmission range of a received beacon signal. If several beacons 110 are installed and activated ("activated" meaning that it is broadcasting its signal), then the amplifier 120 will amplify and retransmit each, or any, beacon signal that it receives.

The gateway 130 is configured for transmitting to the CPU signals that have been broadcasted by beacons installed on cars of the guided vehicle. The signals are then processed by the CPU for checking the integrity of the guided vehicle from said unique identifier. The gateway is for instance a Bluetooth gateway. The gateway typically pushes the received signal, notably data comprised in said signal, like the identifier of each beacon, to the CPU for further processing. The amplifiers and the gateway enable thus to wirelessly connect the CPU to the beacon, notably, at least to the first beacon FB, so that the CPU might detect a presence of said first beacon FB.

Figure 2 schematically shows different external shapes of the beacon 110, gateway 120, and amplifier 130 according to the invention. Preferentially, the beacon, gateway and amplifier might have a same shape, distinction between the devices being made for instance in function of a color or a numerical and/or textual reference affixed to the device. Preferentially, the external shape of the beacon, gateway and amplifier is aerodynamic, for instance comprising a spherical or ellipsoidal cap 11. Preferentially, the beacon 110 and the amplifier 120, but optionally also the gateway 130, comprise each a hand clamp base 12 configured for enabling a fixation on a car of the guided vehicle free of any tool. An operator can thus directly manually clamp the device (beacon, or gateway, or amplifier) on the car, or manually removed it by unclamping said hand clamp base. Said hand clamp base might be for instance a magnetic base configured for clamping on a metallic receiving part of the car. Preferentially, the beacon and the amplifier are each powered by an own battery configured for providing energy for their working. Optionally, if the gateway also comprises said hand clamp base, then it is also powered by a battery. Preferentially, the hand clamp base 12 enables also a clamping on a charging device for charging the battery of the beacon, or resp. gateway, or resp. amplifier. Typically, said hand clamp base may comprise electrical connectors 13 for a connection to said charging device, notably when clamped to it. Preferentially, the beacon and the amplifier, and optionally the gateway if comprising a hand clamp base sharing at least one geometrical feature, or might comprise the same hand clamp base, in order to enable using the same charging device for all devices, i.e. for the beacon and the amplifier, and optionally said gateway. The signal broadcasted by the beacon 110 is typically a radio signal, e.g. a Bluetooth beacon, wherein said signal comprises a packet of data comprising at least said unique identifier. The amplifier typically receives the signal, amplifies it using known in the art techniques for amplifying a radio signal, and rebroadcast or retransmit the amplified signal so as to extend the transmission range of the beacon. The whole transmission chain of the signal, from the beacon to the gateway via the amplifiers takes place wirelessly.

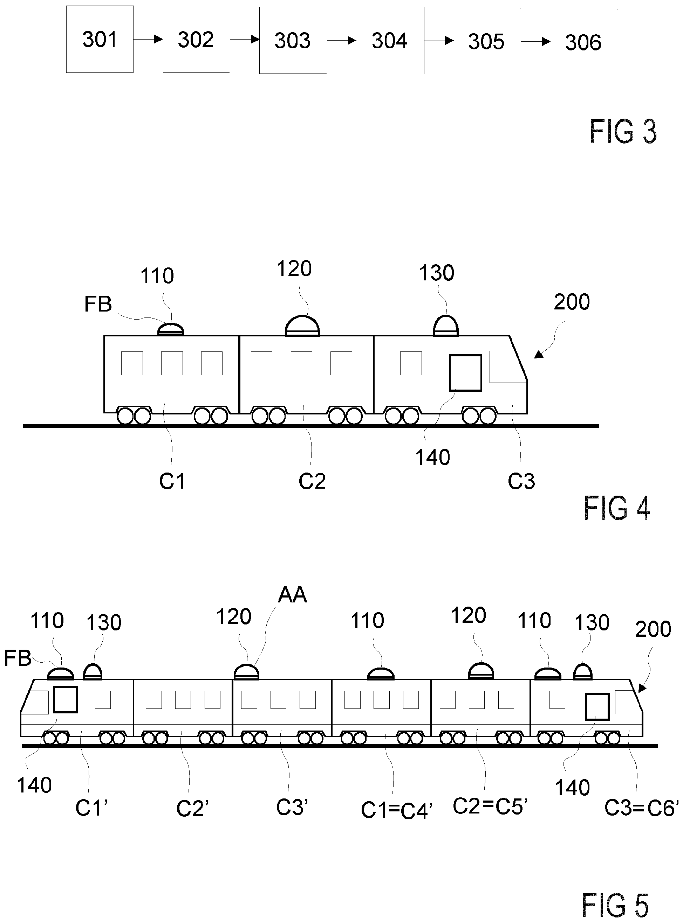

A preferred embodiment of the method according to the invention will be described now in connection with Figure 3. In this example, we will consider the guided vehicle 200 presented in Figure 4, which comprises three cars, namely a first car C1, a second car C2, and a third car C3, wherein the second car C2 is an intermediate car that is coupled to the first car C1 and to the third car C3. In this illustration of the method, the third car C3 is a motorized car, e.g. a locomotive. We will consider that at some time, the car composition of the guided vehicle 200 of Figure 4 will be changed for resulting in the guided vehicle illustrated in Figure 5, which comprises six cars, namely a first car C1', a second car C2', a third car C3', a fourth car C4', a fifth car C5' and a sixth car C6', as represented in Figure 5, and obtained by coupling the guided vehicle of Figure 4 to three additional cars, namely C1'-C3'.

At step 301, one or several beacons 110 are installed on the cars of the guided vehicle, wherein at least one beacon 110, i.e. said first beacon FB, is installed on the first car C1. Given the small number of cars of the guided vehicle 200 illustrated in Figure 4, only the first beacon FB need to be installed. If the guided vehicle 200 comprised more cars and it was for instance planned to split it in two parts during its travel, then an additional beacon could have been installed in anticipation of this splitting.

At step 302, one or several amplifiers 120 are installed or mounted on the guided vehicle 200, wherein each amplifier is installed on one of said intermediate car(s) of the guided vehicle. Again, given the small number of cars of the guided vehicle 200 of Figure 4, only one amplifier 120 is required for enabling a transmission of the signal broadcasted by the first beacon FB to the gateway 130. If the guided vehicle is very short, for instance if it does not comprise any intermediate cars, then it may happen that no amplifier be required, the signal broadcasted by the first beacon FB being strong enough for reaching the gateway 130. In particular, an operator may install first, the first beacon FB and activate it. Typically, the first beacon comprises a hand clamp base that enables the operator to manually clamp the first beacon on a receiving part of the first car C1. For instance, if the clamp is a magnetic clamp, the first beacon FB might be installed on any appropriate metallic receiving structure of the first car C1. If the hand clamp base is a mechanical clamp, one or several mechanical receiving parts might be fixedly installed on the car for receiving a mechanical structure of the mechanical clamp, wherein, by manually clamping the hand clamp base, said mechanical structure becomes fixedly maintained in or by said mechanical receiving part. Advantageously, said clamping is realized by hand, free of any tool, as well as the unclamping. This enables an easy installation and removal of the beacon, and the same applies mutatis mutandis to the amplifier and the gateway.

Once activated, the first beacon FB, as well as any beacon 110 according to the invention, is configured for broadcasting a radio signal comprising a unique identifier that is associated to the beacon and enables to distinguish said beacon from another the signal broadcasted by another beacon. Preferentially, the beacon, as well as the amplifier if any, the gateway and the CPU might be activated remotely, for instance via an application configured for being installed on a mobile device. Using said mobile device, an operator may for instance activate a beacon, like the first beacon, as well as the gateway and CPU. This preferentially takes place during an initialization phase. After activation of the CPU, gateway, and beacon, the CPU might be configured for automatically determining whether it receives the signal of the activated beacon. If no beacon signal is received or if the amplitude of the signal received from said beacon is below a predefined threshold or level, then the CPU might automatically indicate or signal, for instance via said application, a need of an amplifier for extending a transmission range of the signal broadcasted by said beacon, e.g. the first beacon. In such a case, an operator could easily clamp an amplifier on an intermediate car, e.g. on car C2, for amplifying the signal of the first beacon and enabling the latter to reach the gateway, and therefore the CPU.

Preferentially, and notably during said initialization phase, the CPU may send a message comprising said unique identifier of the beacon for which it received the signal via the gateway, said message being for instance sent by the CPU to said mobile device and configured for displaying, via said application, the unique identifier on a display of the mobile device of the operator, notably for validation purpose. In this case, the operator may for instance validate, via said application, that the received signal is the one sent by the beacon the operator installed (this means that the unique identifier displayed indeed corresponds to the installed and activated beacon). If none of the displayed unique identifiers corresponds to the installed beacon, then the operator may acknowledge this fact via the display, which launches within the CPU said indication, notably via said application, that an amplifier is needed for extending the transmission range of the signal broadcasted by the installed beacon, which is typically, during said initialization phase, the first beacon. Alternatively, the unique identifier of an installed beacon (e.g. the first beacon) might be provided to the CPU by a user, e.g. by the operator in charge of installing the beacon, the system automatically saving said unique identifier in a memory of the CPU. The CPU may then determine whether the saved unique identifier is comprised in a signal received by the gateway. In particular, if several beacons are installed by an operator, then the CPU might receive, via said application, a list of the unique identifiers of all installed beacons, the listed unique identifiers being then saved in the memory of the CPU. In this case, the CPU determines then whether a signal is received from each installed beacon by checking (using for instance a comparison technique) if each listed unique identifier is found in the signals received by the gateway. This checking might take place preferentially during said initialization phase. In particular, if the CPU finds each unique identifier that has been saved in its memory in a signal transmitted by the gateway, then the CPU might indicate, notably via said application, that the initialization phase is completed. Otherwise, it may indicate via said application a need of an amplifier for each beacon whose unique identifier has been saved in its memory, and for which the broadcasted signal has not been received by the gateway.

At step 303, the gateway 130 is installed on the last car of the guided vehicle 200, that is car C3 according to Figure 4. The gateway 130 is configured for collecting or receiving the signal(s) broadcasted by the beacon(s) and pushing said signal(s) towards the CPU 140 for further processing. The gateway 130 is typically a Bluetooth gateway. Typically, an installation of the system according to an invention starts with an installation and activation of the first beacon FB on the first car and of the gateway on the last car, followed by a determination whether one or several amplifiers are needed for extending the transmission range of the first beacon FB. In the case of Figure 4, the CPU will for instance indicate, via said application, that it does not receive the signal of the installed first beacon FB, and that an amplifier 120 is therefore needed. In particular, the transmission range of a beacon according to the invention is preferentially configured for being at least greater that the length of a guided vehicle car. This enables an operator to determine an approximative installation position of an amplifier, notably with the help of said application signaling to the operator whether the signal received by the gateway exceeds or not said predefined threshold. In particular, once the CPU 140 has determined that the signal of the first beacon FB is received by the gateway from the unique identifier comprised in the signal received by the gateway, then the initialization phase is completed.

At step 304, the gateway transmits to the CPU the received beacon signals. This can be done wirelessly or via wire. Typically, the gateway 130 receives a beacon broadcasted signal either directly from the beacon 110 if the nominal transmission range of said beacon 110 covers the distance separating the beacon 110 from the gateway 130, or indirectly, after one or several amplifications by the installed amplifiers 120 if the nominal transmission range of the beacon 110 is smaller than said distance.

At step 305, the CPU determines whether at least the first beacon FB is present. Preferentially, the CPU determines whether each installed beacon 110 is present. Said determination may take place continuously, or periodically, or upon request, for instance via said application. For instance, during said initialization phase, said determination may take place upon request, for testing the system by an operator. Once the initialization phase is completed, said determination preferentially takes place continuously, or periodically, notably each time a beacon signal is received by the gateway. For determining if a beacon, like the first beacon FB, is present, the CPU is configured for extracting from the received signal said unique identifier, and for determining whether each of the unique identifiers comprised in its memory has been extracted from a received signal. In other words, it shall find for each unique identifier stored in its memory a matching unique identifier in the received signal(s). As long as such a matching is found by the CPU, no alert is triggered, the CPU considering the beacon(s) as present. However, if one of the saved unique identifiers cannot be find in the received signals when proceeding to said extraction, then the CPU is configured for automatically triggering an alert, which is for instance displayed in the guided vehicle driver cabin. Typically, the CPU is configured for automatically triggering said alert if the unique identifier of the first beacon FB cannot be identified in any received signal.

At step 306, the method according to the invention may comprise adding or removing an amplifier and/or a beacon in case of a change of the car composition of the guided vehicle 200. For instance, Figure 5 illustrate a case wherein three additional cars are added to the guided vehicle of Figure 4. Consequently, the guided vehicle 200 of Figure 5 comprises six cars, wherein the first car C1', the second car C2', and the third car C3', have been added to the guided vehicle of Figure 4, while the cars C4'-C6' are respectively the cars C1-C3 of the guided vehicle of Figure 4. Consequently, the beacon 110 of car C4', which was the first beacon FB in Figure 4, becomes now an "intermediate beacon" in that it is installed on an intermediate car instead of on the first car. In Figure 5, the first car C1' is preferentially a motorized car. Said first car C1' comprises the first beacon FB, and optionally a gateway 130. Preferentially, it may also comprise a CPU 140. Typically, the previously described initialization phase takes place at each new car composition, unless said new car composition corresponds to a splitting of the guided vehicle that was already planned and for which beacons and amplifiers have been already initially installed at appropriate positions in function of said splitting. For instance, after having coupled the cars C1'-C3' to the guided vehicle 200 of Figure 4, an operator may activate the first beacon FB on car C1'. In the case of Figure 5, the CPU 140 is likely to indicate that an amplifier is needed because the signal of the first beacon FB is not received by the gateway 130 installed on the last car C6'. The operator may then add an additional amplifier AA, for extending the transmission range of the first beacon FB, so that the signal broadcasted by the first beacon FB reaches the amplifier 120 of car C5', which then re-amplifies the received signal and rebroadcasts it so that it reaches finally the gateway 130 of the last car C6'.

To conclude, the present invention proposes a modular system that can be easily adapted to changes of a guided vehicle composition by adding or removing a beacon and/or an amplifier, so that a signal broadcasted by a first beacon installed on a first car of the guided vehicle might always reach a gateway installed on the last car of said guided vehicle. Thanks to a practical clamping base, any beacon and/or amplifier according to the invention, and optionally the gateway, might be manually fixed to the cars of the guided vehicle in a manner free of any tool. Finally, the CPU may cooperate with an application configured for being installed on a mobile device and that may help an operator to install a beacon and/or amplifier according to the invention, notably for determining an amplifier position that enables to appropriately extend the transmission range of the first beacon.

## Claims

1. System (100) for checking an integrity of a guided vehicle (200), said guided vehicle (200) comprising a first car (FC), a last car (LC), and optionally one or several intermediate cars (IC) located between the first car (FC) and the last car (LC), said system (100) comprising:
- at least one beacon (110), each beacon (110) being configured for wirelessly broadcasting a signal comprising a unique identifier enabling an identification of the beacon (110) broadcasting said signal, wherein at least one beacon (110), hereafter called first beacon (FB), is configured for being installed on the first car (FC);
- optionally, one or several amplifiers (120) for extending a transmission range of a received beacon signal so that it reaches a gateway (130), each amplifier being configured for being installed on one of said intermediate cars (IC);
- said gateway (130) configured for receiving any beacon signal, said gateway (130) being configured for being installed on the last car (LC) and for transmitting any received beacon signal to a central processing unit (140), hereafter CPU;
- said CPU (140), connected to the gateway (130), and configured for determining a presence of the first beacon (FB) by identifying, in the beacon signals transmitted by the gateway (130), the unique identifier of the first beacon (FB).

2. System (100) according to claim 1, wherein each amplifier (120) and/or each beacon (110) comprise(s) a hand clamp base (12) configured for being removably fixed onto a car (201) of the guided vehicle (200) in a manner free of any tool.

3. System (100) according to claim 2, wherein said hand clamp base (12) is a magnetic base.

4. System (100) according to claim 2, comprising one or several mechanical receiving parts, wherein each mechanical receiving part is configured for being fixedly installed on a car (201) of the guided vehicle (200), and wherein each mechanical receiving part is configured for receiving a mechanical structure of said hand clamp base in order to removably fix the base (12) onto the car (201).

5. System (100) according to one of the claims 1 to 4, comprising at least another beacon (110), called hereafter the additional beacon, wherein each additional beacon is configured for being installed on one of said intermediate cars (IC), and wherein each additional beacon is configured for wirelessly broadcasting a signal comprising a unique identifier enabling an identification of the additional beacon (110) broadcasting the signal.

6. System (100) according to one of the claims 1 to 5, wherein each amplifier (120) is configured for amplifying any received beacon signal and for wirelessly rebroadcasting the beacon signal once amplified.

7. System (100) according to one of the claims 1 to 6, wherein, during an initialization phase, the CPU (140) is configured for storing in a memory the unique identifier of each beacon (110) installed on the guided vehicle (200).

8. System (100) according to one of the claims 1 to 7, wherein the CPU (140) is configured for automatically indicating a need of an amplifier (120) for extending a transmission range of the signal broadcasted by the first beacon (FB).

9. System (100) according to one of the claims 1-8, wherein the CPU (140) is configured for automatically triggering an alert if the unique identifier of the first beacon (FB) cannot be identified or found by the CPU in any received beacon signal.

10. Method for checking an integrity of a guided vehicle (200), said guided vehicle (200) comprising a first car (FC), a last car (LC), and optionally one or several intermediate cars (IC) located between the first car (FC) and the last car (LC), the method comprising:
- installing (301) one or several beacons (110) on the cars (201) of the guided vehicle (200), wherein at least one beacon (110), called hereafter the first beacon (FB), is installed on the first car (FC), each beacon (110) wirelessly broadcasting a signal comprising a unique identifier enabling an identification of the beacon (110) broadcasting said signal;
- optionally, installing (302) one or several amplifiers (120), wherein each amplifier (120) is installed on an intermediate car (IC) of the guided vehicle (200), and using said one or several amplifiers (120) for extending a transmission range of each broadcasted signal so that it reaches a gateway (130);
- installing (303) the gateway (130) on the last car (LC) of the guided vehicle (200) and receiving beacon signals by said gateway (130);
- transmitting (304), by the gateway (130), the received beacon signals to a central processing unit (140), hereafter CPU;
- checking (305) a presence of the first beacon (FB) by identifying, by the CPU (140), the unique identifier of the first beacon (FB) in the beacon signals transmitted by the gateway (130).

11. Method according to claim 10, comprising installing one or several other beacons, called hereafter "additional beacon", wherein each additional beacon is configured for being installed on one of said intermediate cars (IC), and wherein each additional beacon is configured for wirelessly broadcasting a signal comprising a unique identifier enabling an identification of the beacon broadcasting the signal.

12. Method according to claim 10 or 11, comprising using a hand clamp base (12) for removably fixing onto a car (201) of the guided vehicle (200) in a manner free of any tool each amplifier (120) and/or beacon (110).

13. Method according to one of the claims 10 to 12, comprising automatically storing in a memory of the CPU (140) the unique identifier of each beacon (110) installed on the guided vehicle (200).

14. Method according to one of the claims 10 to 13, comprising automatically indicating, by the CPU (140), a need of an additional amplifier (120) for receiving the signal broadcasted by the first beacon (FB).

15. Method according to one of the claims 10-14, comprising automatically triggering an alert if the unique identifier of the first beacon (FB) cannot be identified by the CPU (140) in any beacon signal received by the gateway (130).
